# EUROPÄISCHE PATENTSCHRIFT

(11) **EP 4 113 726 B1**
(45) Veröffentlichungstag und Bekanntmachung des Hinweises auf die Patenterteilung: **08.05.2024**
(21) Anmeldenummer: 22165361.1
(22) Anmeldetag: 30.03.2022
(51) Int. Cl.: H01M 50/262, B60L 53/80, B60S 5/04, B66C 1/42, H01M 50/244, H01M 50/249

(54) **HUBVORRICHTUNG**
LIFTING DEVICE
DISPOSITIF DE LEVAGE

(30) Priorität: 14.05.2021 DE 102021204894
(43) Veröffentlichungstag der Anmeldung: 04.01.2023
(73) Patentinhaber: Volkswagen Aktiengesellschaft, 38440 Wolfsburg (DE)
(72) Erfinder: Schulze, Malte, 38518 Gifhorn (DE); Storm, Ernst, 29399 Wahrenholz (DE)

(56) Entgegenhaltungen:
- EP-A2- 1 221 425
- DE-A1- 19 544 463
- DE-A1- 19 832 195
- DE-U1- 9 319 763
- US-A- 2 654 629
- US-A- 4 702 508

## Beschreibung

Die Erfindung betrifft eine Hubvorrichtung zur Demontage eines Batteriemoduls aus einem Batteriegehäuseteil nach dem Oberbegriff des Anspruches 1 sowie ein Verfahren zur Demontage eines solchen Batteriemoduls nach Anspruch 15.

Ein Hochvolt-Batteriesystem eines elektrisch betriebenen Fahrzeugs wird aus unterschiedlichen Gründen am Ende seiner Nutzungsphase bis auf Einzelmodulebene demontiert, bevor es einer Entsorgung bzw. einem Recycling zugeführt wird. Zudem können Hochvolt-Batteriesysteme anfallen, deren Demontage aus Sicherheitsgründen bis auf Modulebene vorzunehmen ist, um weitere Havarieprozesse (zum Beispiel Brand oder Explosion) zu vermeiden. Bei der Demontage des Hochvolt-Batteriesystems besteht die Problematik darin, dass die Batteriemodule nicht nur mit dem Batteriegehäuseteil (das heißt Batterietrog) verschraubt sind, sondern zur Erhöhung der Kühlleistung zusätzlich noch eine Wärmeleitpaste zwischen dem Batterietrog und dem jeweiligen Batteriemodul aufgebracht ist. Die Wärmeleitpaste erzeugt eine kraftschlüssige Haftverbindung zwischen Batteriemodul und Batterietrog. Bei der Demontage muss dieser Kraftschluss überwunden werden. Da sich die Batteriemodule in einzelnen, engen Kammern des Batterietrogs befinden und über die gesamte Bauteilhöhe mit der Oberkante des Batterietrogs abschließen, ist die Demontage der Batteriemodule mit technischen Schwierigkeiten verbunden.

In einem gattungsgemäßen Demontageprozess wird eine Hubvorrichtung, das heißt Hebezeug oder Kran, bereitgestellt, mit dessen Hilfe in einem Hubvorgang das jeweilige Batteriemodul aus dem Batteriegehäuseteil gehoben wird.

In dem gattungsgemäßen Demontageprozess wird vor dem Hubvorgang ein separater Arbeitsschritt durchgeführt, bei dem ein separates Brechwerkzeug am Batteriemodul angesetzt wird, um die Haftverbindung des Batteriemoduls am Batterietrog zu lösen. Erst anschließend wird das Hebezeug bzw. der Kran am losgelösten Batteriemodul angebracht und danach aus dem Batterietrog herausgehoben. Vor diesem Hintergrund ist der herkömmliche Demontageprozess im Hinblick auf die lange Prozesszeitdauer sowie die fertigungstechnisch aufwändige Modul-Demontage nicht für den Serienmaßstab geeignet.

Aus der DE 199 62 266 A1 ist ein Verfahren und eine Einrichtung zum Zerlegen von Kraftfahrzeugen bekannt. In DE 198 32 195 ist eine Handhabungsvorrichtung für eine Fahrzeugbatterie offenbart.

Die Aufgabe der Erfindung besteht darin, eine Hubvorrichtung zur Demontage eines Batteriemoduls aus einem Batteriegehäuseteil sowie einen Demontageprozess bereitzustellen, der im Vergleich zum Stand der Technik mit reduzierter Prozessdauer sowie im Serienmaßstab durchführbar ist.

Die Aufgabe ist durch die Merkmale des Anspruches 1 oder 15 gelöst. Bevorzugte Weiterbildungen der Erfindung sind in den Unteransprüchen offenbart.

Die Erfindung geht von einer Hubvorrichtung zur Demontage eines Batteriemoduls aus einem Batteriegehäuseteil, insbesondere Batterietrog, eines Hochvolt-Batteriesystems aus. Das Batteriemodul ist unter Zwischenlage einer Wärmeleitpaste in Haftverbindung mit dem Gehäuseboden des Batteriegehäuseteils. Die Hubvorrichtung weist eine hubverstellbare Greifereinheit mit zumindest einem Greifer auf. Dieser ist in einer Eingriffsposition mit dem Batteriemodul in Eingriff. In einem Hubvorgang kann die Greifereinheit das Batteriemodul aus dem Batteriegehäuseteil heben. Gemäß dem kennzeichnenden Teil des Anspruches 1 ist der Greifer als ein Aushebel-Greifer realisiert, der in Doppelfunktion sowohl im Hubvorgang das Batteriemodul ergreift als auch in einem zeitlich vorgelagerten Aushebelvorgang das Batteriemodul unter Lösung der Haftverbindung einseitig anhebt. Auf diese Weise wird ein Rüstzeug-Wechsel zwischen dem Lösen der Haftverbindung und dem Anheben des Batteriemoduls vermieden, wodurch sich eine im Vergleich zum Stand der Technik reduzierte Prozesszeit sowie ein fertigungstechnisch günstiger Demontageprozess ergibt, der für den Serienmaßstab geeignet ist. Im Aushebelvorgang wir der Aushebel-Greifer mit einem Aushebel-Moment beaufschlagt, mittels dem der Aushebel-Greifer das Batteriemodul geringfügig seitlich anhebt, um die von der Wärmeleitpaste bewirkte Haftverbindung zu lösen.

In einer technischen Umsetzung ist der Aushebel-Greifer als ein Hebelarm ausgebildet. Der Hebelarm kann während des Aushebelvorgangs bevorzugt mit seinem Hebelarm-Ende an einer vom Batteriemodul separaten, insbesondere batteriegehäuseseitigen Stützkontur abgestützt sein. Auf diese Weise definiert sich zwischen dem Hebelarm-Ende und der Stützkontur eine Hebelarm-Schwenkachse, um die der Hebelarm mit dem Aushebel-Moment angetrieben wird.

Der Aushebel-Greifer kann einen Haken aufweisen. Dieser kann in der Greifer-Eingriffsposition eine Batteriemodul-Gegenkontur untergreifen. Im Hinblick auf kräftetechnisch günstige Hebelverhältnisse kann der Haken um eine bevorzugt kurze Hebelarmlänge von der Hebelarm-Schwenkachse beabstandet sein.

Der Aushebel-Greifer weist eine Krafteinleitungsstelle auf, in die während des AushebelVorgangs eine Aushebel-Kraft einleitbar ist. Mittels der Aushebel-Kraft wird das auf den Aushebel-Greifer wirkende Aushebel-Moment ausgebaut. Im Vergleich zu dem Haken des Aushebel-Greifers ist es bevorzugt, wenn die Krafteinleitungsstelle um eine bevorzugt lange Hebelarmlänge von der Hebelarm-Schwenkachse beabstandet ist.

Die Greifereinheit kann zusätzlich zum Aushebel-Greifer einen weiteren Greifer aufweisen. Die beiden Greifer können in der Eingriffsposition mit einander gegenüberliegenden Batteriemodulseiten in Eingriff bringbar sein. Die beiden Greifer können an einer, das Batteriemodul überspannenden Quertraverse montiert sein. Diese kann wiederum mit Hilfe eines Zugmittels, zum Beispiel ein Zugseil oder eine Zugkette, im Hubvorgang angehoben werden.

Eine einfache Handhabung der Greifereinheit ist im Hinblick auf eine Prozessvereinfachung von großer Bedeutung. Vor diesem Hintergrund kann eine lichte Weite zwischen den beiden Greifern einstellbar sein. So können bei einer reduzierten lichten Weite sich die beiden Greifer in einer schmalen Eingriffsposition befinden, bei der beide Greifer die korrespondierenden Batteriemodul-Gegenkonturen untergreifen. Alternativ dazu können bei einer vergrößerten lichten Weite sich die beiden Greifer störkonturfrei an den beiden Batteriemodul-Gegenkonturen vorbeibewegen.

In einer ersten Ausführungsform kann der Aushebel-Greifer an der Quertraverse schwenkbeweglich über eine Langlochführung gehaltert sein. In der Langlochführung kann ein Verbindungspartner, bevorzugt Quertraverse, einen Lagerzapfen aufweisen, der in einem Langloch des anderen Verbindungspartners, bevorzugt Aushebel-Greifer, verstellbar geführt ist.

In diesem Fall kann die Quertraverse der Greifereinheit Schwenkanschläge aufweisen, zwischen denen der Aushebel-Greifer über einen Schwenkweg verstellbar ist.

Bevorzugt ist es, wenn das Zugmittel der Hubvorrichtung unmittelbar an der Krafteinleitungsstelle des Aushebel-Greifers angreift. In diesem Fall ergibt sich folgender Demontageprozess: Nach erfolgtem Anlegen der beiden Greifer am Batteriemodul wird die Greifereinheit angehoben. Beim Aufbau der auf die Greifereinheit wirkenden Hubkraft erfolgt der Aushebelvorgang, bei dem die Hubkraft als Aushebelkraft auf den Aushebel-Greifer einwirkt, sodass der Aushebel-Vorgang gestartet wird. Im weiteren Prozessverlauf, das heißt nach erfolgtem Aushebelvorgang, startet der Hubvorgang, bei dem das aus seiner Haftverbindung gelöste Batteriemodul aus dem Batteriegehäuseteil gehoben wird.

In einer zweiten konkreten Ausführungsvariante können der Aushebel-Greifer und/oder der weitere Greifer jeweils über einen Greifer-Schlitten querverstellbar an der Quertraverse geführt sein. Durch Querverstellung der Greifer kann die lichte Weite zwischen den beiden Greifern eingestellt werden.

In diesem Fall kann der Aushebel-Greifer an einer Schwenkstelle schwenkbar an der Quertraverse oder unmittelbar am Greifer-Schlitten angelenkt sein. Die Schwenkachse dieser Schwenkstelle verläuft achsparallel zur Hebelarm-Schwenkachse. In diesem Fall wird während des Aushebelvorgangs das Hebelarm-Ende auf der batteriegehäuseseitigen Stützkontur abgewälzt. Der Greifer-Schlitten kann ein Stellglied aufweisen, zum Beispiel eine Kolben-Zylinder-Einheit, mittels der die Aushebelkraft auf die Krafteinleitungsstelle des Aushebel-Greifers ausübbar ist. Die Kraftausübung erfolgt somit entkoppelt von der Hubkraft, die mittels der die Greifereinheit während des Hubvorgangs angehoben wird.

Nachfolgend sind Ausführungsbeispiele der Erfindung der anhand der beigefügten Figuren beschrieben.

### Es zeigen:

- Figuren 1 bis 4: jeweils Ansichten, anhand derer ein Demontageprozess gemäß einem ersten Ausführungsbeispiel gezeigt ist; und
- Figuren 5 und 6: jeweils Ansichten, anhand derer ein Demontageprozess gemäß einem zweiten Ausführungsbeispiel veranschaulicht ist.

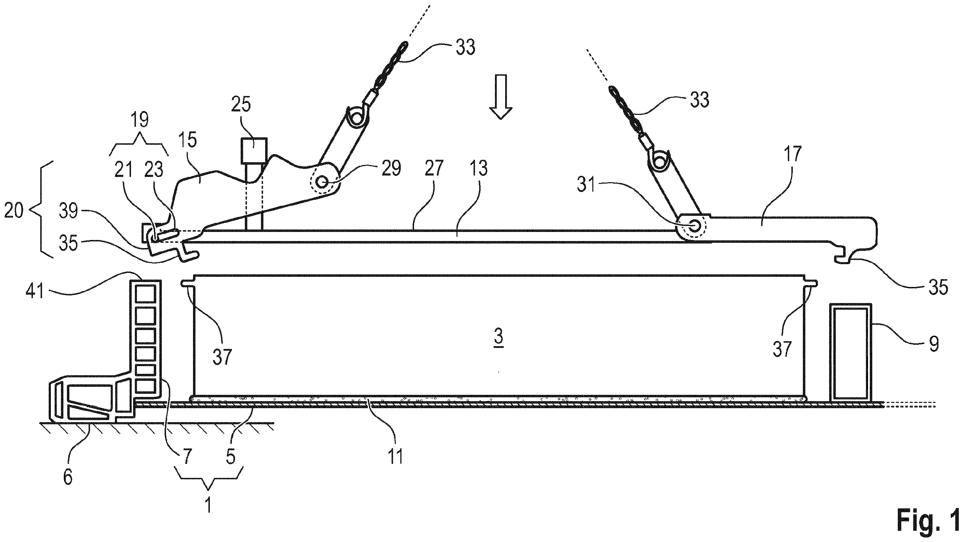

In der Figur 1 ist ein Batterietrog 1 eines Batteriegehäuses gezeigt, bei dem der Gehäusedeckel bereits demontiert ist. In dem Batteriegehäuse sind eine Anzahl von Batteriemodulen 3 eines Hochvolt-Batteriesystems für ein elektrisch betriebenes Fahrzeug verbaut, von denen in der Figur 1 lediglich ein Batteriemodul 3 gezeigt ist. Der Batterietrog 1 weist einen Gehäuseboden 5 mit umlaufender Gehäuseseitenwand 7 auf. Zudem ist der Gehäuseinnenraum mittels Trennwänden 9 in Teilkammern unterteilt, in denen jeweils ein Batteriemodul 3 angeordnet ist. Der Gehäuseboden 5 des Batterietrogs 1 ist Bestandteil eines nicht gezeigten Batterie-Kühlsystems. Zur Steigerung der Kühlleistung ist das Batteriemodul 3 unter Zwischenlage einer Wärmeleitpaste 11 auf dem Gehäuseboden 5 positioniert.

In der Figur 1 ist der Batterietrog 1 zu Vorbereitung einer Demontage auf einer Arbeitsfläche 6 außerhalb des Fahrzeugs positioniert. Die Demontage des Batteriemoduls 3 aus dem Batterietrog 1 wird mit einem Hubvorrichtung, das heißt einem Hebezeug, durchgeführt, dessen Aufbau nachfolgend beschrieben ist: Demnach weist das Hebezeug als Hauptkomponenten eine Quertraverse 13, einen Aushebel-Greifer 15 sowie einen weiteren Greifer 17 auf. Der Aushebel-Greifer 15 ist als ein Hebelarm realisiert, der schwenkbeweglich und/oder linear verstellbar über eine Langlochführung 19 an der Quertraverse 13 gehaltert ist. Die Langlochführung 19 ist aus einem, an der Quertraverse 13 montierten Lagerzapfen 21 aufgebaut, der in einem Langloch 23 des Aushebel-Greifers 15 verstellbar geführt ist. Die Quertraverse 13 weist Schwenkanschläge 25, 27 auf, zwischen denen der Aushebel-Greifer 15 über einen Schwenkweg verstellbar ist. Im unbelasteten Zustand (Figur 1) ist der Aushebel-Greifer 15 in Anlage mit dem oberen Schwenkanschlag 25 der Quertraverse 13 geschwenkt.

Im Unterschied zum Aushebelgreifer 15 ist der weitere Greifer 17 nicht schwenkbeweglich an der Quertraverse 13 gehaltert, sondern vielmehr ortsfest an der Quertraverse 13 montiert. Die beiden Greifer 15, 17 weisen jeweils Anlenkstellen 29, 31 auf, an denen Zugketten 31 des Hebezeugs in Eingriff sind.

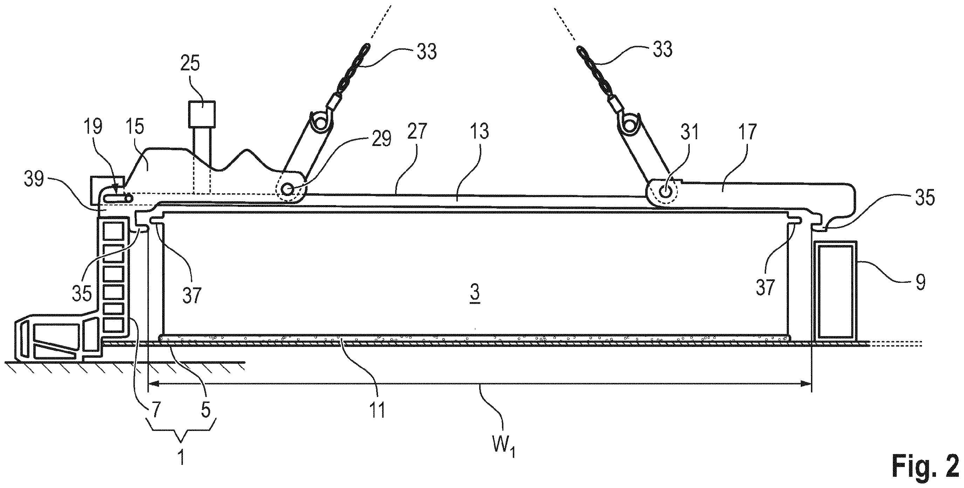

In der Figur 2 ist die Quertraverse 13 bis nahe der Oberseite des Batteriemoduls 3 abgesenkt. Die Quertraverse 13 überspannt das Batteriemodul 3, wobei der Aushebel-Greifer 15 im Uhrzeigersinn gegen den unteren Schwenkanschlag 27 der Quertraverse 13 geschwenkt ist. Der Aushebel-Greifer 15 ist in der Langlochführung 19 bis zum, in der Figur 1 rechten Langloch-Anschlag verstellt. Von daher ist in der Figur 2 eine lichte Weite w₁ zwischen den beiden Greifern 15, 17 so vergrößert, dass die Haken 35 der beiden Greifer 15, 17 störkonturfrei an zugeordneten Batteriemodul-Gegenkonturen 37 vorbeigeführt werden können.

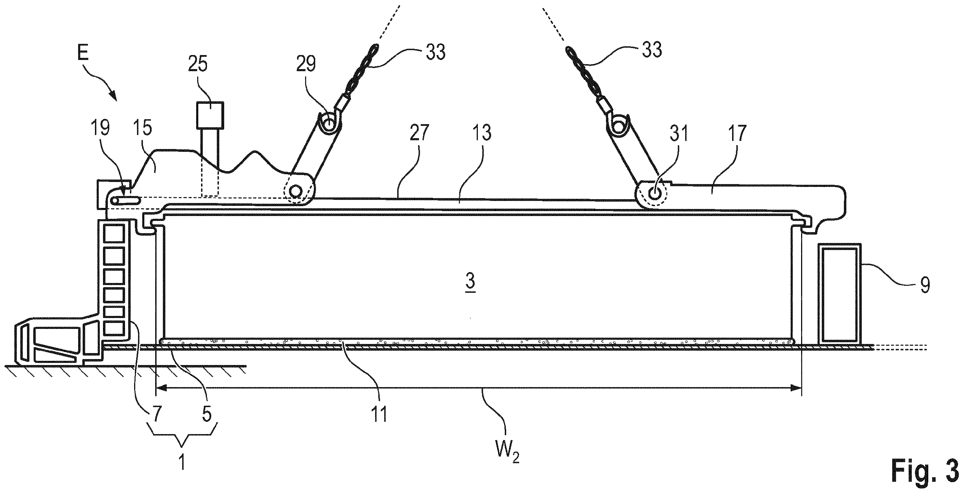

Durch horizontales Verstellen des Aushebel-Greifers 15 in der Langlochführung 19 bis zum linken Langloch-Anschlag (Figur 3) ergibt sich eine reduzierte lichte Weite w₂ zwischen den beiden Greifern 15, 17. Dadurch untergreifen die beiden Haken 35 die korrespondierenden Batteriemodul-Gegenkonturen 37. Beide Greifer 15, 17 befinden sich daher in einer Eingriffsposition E (Figur 3).

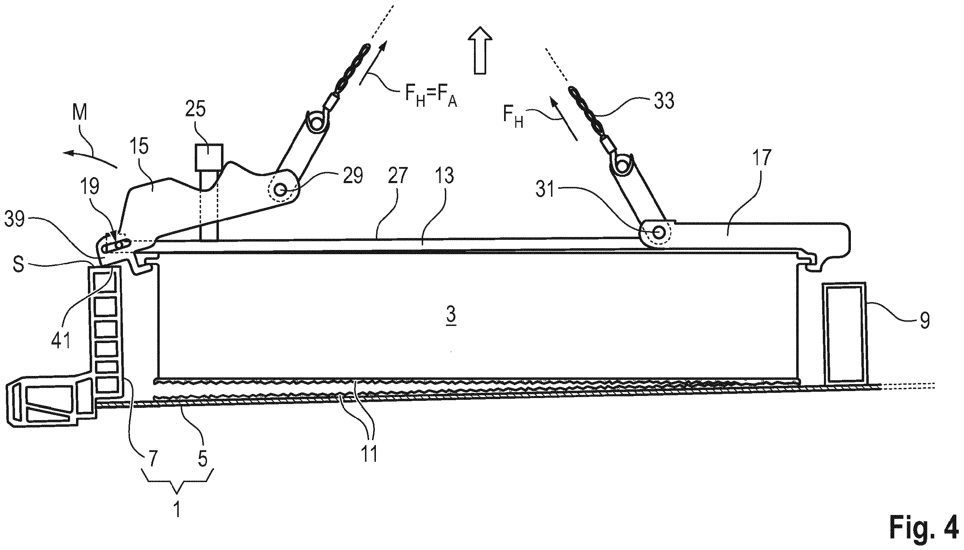

Nachfolgend wird der mittels des Hebezeugs durchführbare Demontageprozess beschrieben: Demnach werden die beiden Zugketten 33 mit einer Hubkraft F_{H} nach oben gezogen. Beim Aufbau der auf die Greifereinheit 20 (Figur 1) wirkenden Hubkraft F_{H} erfolgt zunächst ein in der Figur 4 gezeigter Aushebelvorgang. Beim Aushebelvorgang wirkt die Hubkraft F_{H} über die Anlenkstelle 29 als eine Aushebelkraft Fa, auf den Aushebel-Greifer 15 ein. Dadurch wird der Aushebel-Greifer 15 mit einem in Uhrzeiger-Gegenrichtung wirkenden Aushebel-Moment M beaufschlagt. Der Aushebel-Greifer 15 ist als ein Hebelarm realisiert, dessen Hebelarm-Ende 39 (Figur 1 oder 4) sich während des Aushebelvorgangs auf einer batteriegehäuseseitigen Stützkontur 41, das heißt einer Oberseite der Gehäuseseitenwand 7, abstützt. Das Hebelarm-Ende 39 des Aushebelgreifers 15 definiert zusammen mit der Stützkontur 41 eine Hebelarm-Schwenkachse S (Figur 4), um die der Aushebel-Greifer 15 mit dem Aushebel-Moment M angetrieben wird.

Während des Aushebelvorgangs (Figur 4) wird der Aushebel-Greifer 15 um einen Schwenkweg bis in Anlage mit dem oberen Schwenkanschlag 25 der Quertraverse 13 geführt. Mit Erreichen des Schwenkanschlags 25 ist das Batteriemodul 3 soweit einseitig angehoben, dass die von der Wärmeleitpaste 11 bewirkte Haftverbindung zwischen dem Batteriemodul 3 und dem Gehäuseboden 5 gelöst ist. Im weiteren Prozessverlauf startet der Hubvorgang (Figur 4), bei dem das Batteriemodul 3 mit Hilfe des Hebezeugs aus dem Batterietrog 1 gehoben wird.

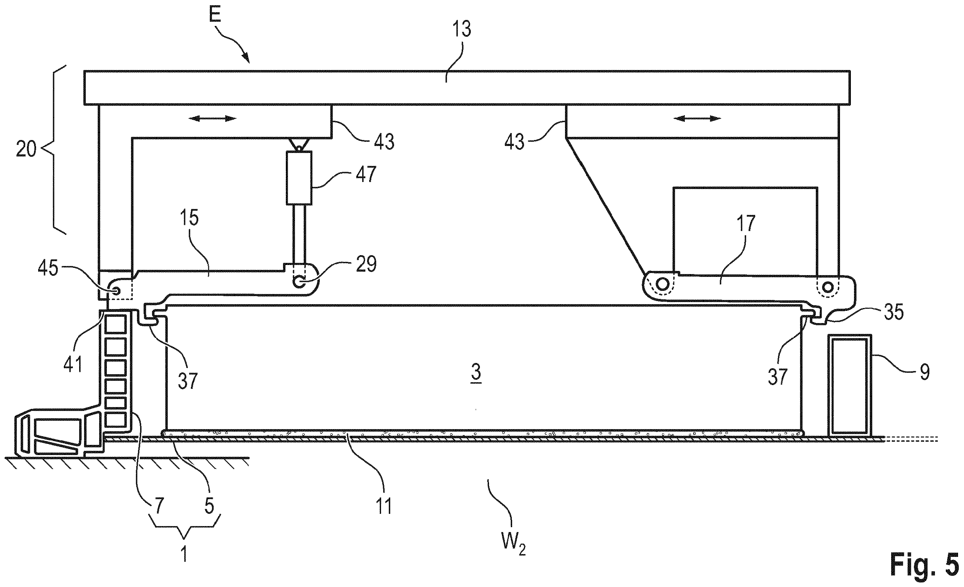

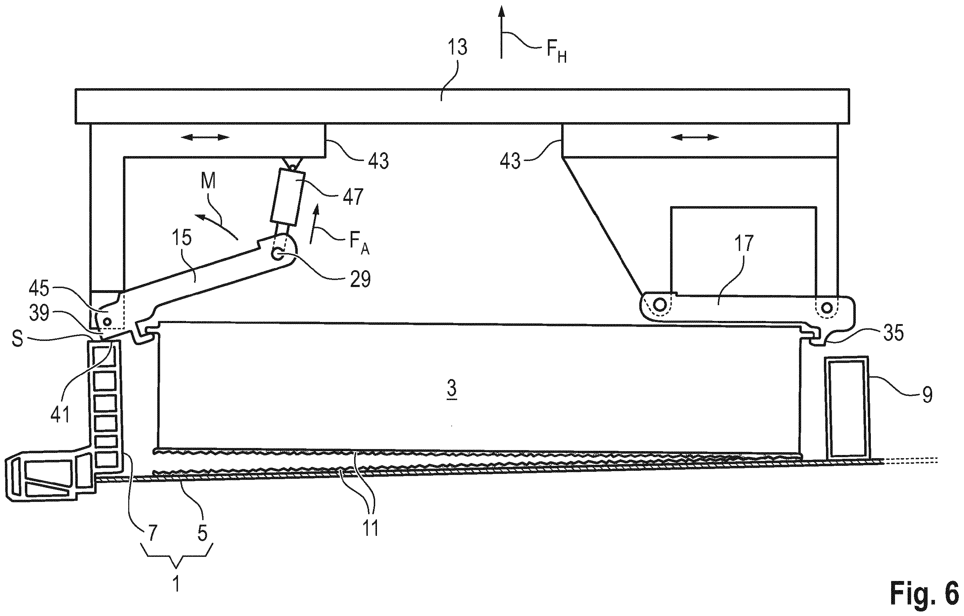

In den Figuren 5 und 6 ist ein Demontageprozess gemäß einem zweiten Ausführungsbeispiel angedeutet. Die in den Figuren 5 und 6 verwendete Hubvorrichtung ist im Wesentlichen funktionsgleich mit der des ersten Ausführungsbeispiels, sodass sich grundsätzlich derselbe Demontageprozess wie in den Figuren 1 bis 4 durchführen lässt. Im Unterschied zum ersten Ausführungsbeispiel ist in den Figuren 5 und 6 jeder der beiden Greifer 15, 17 über einen Greifer-Schlitten 43 automatisch querverstellbar an der Quertraverse 13 geführt. Der Aushebel-Greifer 15 ist an einer Schwenkstelle 45 schwenkbar an dem Greifer-Schlitten 43 angelenkt. Die Schwenkachse der Schwenkstelle 45 ist achsparallel zur Hebelarm-Schwenkachse S ausgerichtet, die zwischen dem Hebelarm-Ende 39 des Aushebel-Greifers 15 und der Stützkontur 41 definiert ist. Zudem weist der in der Figur 5 linke Greifer-Schlitten 43 ein Stellglied 47 auf, mit dem eine Aushebelkraft Fa, auf eine Krafteinleitungsstelle 29 des Aushebel-Greifers 15 ausübbar ist.

Durch Verstellen der Greifer-Schlitten 43 kann die lichte Weite w zwischen den beiden Greifern 15, 17 erhöht oder reduziert werden. In der Figur 5 sind die beiden Greifer 15, 17 in ihrer Eingriffsposition E gezeigt, in der die Haken 35 der beiden Greifer 15, 17 die korrespondierenden Batteriemodul-Gegenkonturen 37 untergreifen. Im weiteren Demontageprozess wird das Stellglied 47 zum Beispiel elektronisch angesteuert, um den Aushebel-Greifer 15 mit einer Aushebelkraft F_{A} zu beaufschlagen, wodurch der in der Figur 6 angedeutete Aushebelvorgang durchgeführt wird. Während des Aushebelvorgangs kommt das Hebelarm-Ende 39 des Aushebel-Greifers 15 in gleitende Druckanlage mit der Stützkontur 41. Das Hebelarm-Ende 39 wälzt sich daher auf der Stützkontur 41 ab. Durch Ausübung der Aushebelkraft F_{A} wird der Aushebel-Greifer 15 mit einem Aushebel-Moment M um die Hebelarm-Schwenkachse S angetrieben. Auf diese Weise wird das Batteriemodul 3 einseitig angehoben, wodurch die von der Wärmeleitpaste 11 bewirkte Haftverbindung gelöst wird. Nach Lösung der Haftverbindung startet der Hubvorgang, bei dem das Batteriemodul 3 aus dem Batterietrog 1 gehoben wird.

### Bezugszeichenliste

- 1: Batteriegehäuseteil
- 3: Batteriemodul
- 5: Gehäuseboden
- 6: Arbeitsfläche
- 7: Gehäuseseitenwand
- 9: Trennwände
- 11: Wärmeleitpaste
- 12: Arbeitsfläche
- 13: Quertraverse
- 15: Aushebel-Greifer
- 17: weiterer Greifer
- 19: Langlochführung
- 20: Greifereinheit
- 21: Lagerzapfen
- 23: Langloch
- 25, 27: Schwenkanschläge
- 29, 31: Anlenkstellen
- 33: Zugketten
- 35: Haken
- 37: Batteriemodul-Gegenkonturen
- 39: Hebelarm-Ende
- 41: Stützkontur
- 43: Greifer-Schlitten
- 45: Schwenkstelle
- 47: Stellglied
- 49: Krafteinleitungsstelle
- w₁: vergrößerte lichte Weite
- w₂: reduzierte lichte Weite
- F_{H}: Hubkraft
- F_{A}: Aushebelkraft
- E: Eingriffsposition
- M: Aushebel-Moment

## Patentansprüche

1. Hubvorrichtung zur Demontage eines Batteriemoduls (3) aus einem Batteriegehäuseteil (1), insbesondere Batterietrog, eines Hochvolt-Batteriesystems insbesondere eines Fahrzeugs, bei dem das Batteriemodul (3) unter Zwischenlage einer Wärmeleitpaste (11) in Haftverbindung mit einem Gehäuseboden (5) ist, wobei die Hubvorrichtung eine hubverstellbare Greifereinheit (20) mit zumindest einem Greifer (15) aufweist, der in einer Eingriffsposition (E) mit dem Batteriemodul (3) in Eingriff ist, und wobei in einem Hubvorgang die Greifereinheit (20) das Batteriemodul (3) aus dem Batteriegehäuseteil (1) hebt, **dadurch gekennzeichnet, dass** der Greifer (15) als ein Aushebel-Greifer realisiert ist, mittels dem vor Durchführung des Hubvorgangs ein Aushebelvorgang erfolgt, bei dem der Aushebel-Greifer (15) mit einem Aushebel-Moment (M) beaufschlagbar ist, so dass der Aushebel-Greifer (15) das Batteriemodul (3) unter Lösung der Haftverbindung einseitig anhebt.

2. Hubvorrichtung nach Anspruch 1, **dadurch gekennzeichnet, dass** der Aushebel-Greifer (15) als ein Hebelarm ausgebildet ist, und dass der Aushebel-Greifer (15) im Aushebelvorgang mit einem Hebelarm-Ende (39) an einer vom Batteriemodul (3) separaten, insbesondere batteriegehäuseseitigen Stützkontur (41) abgestützt ist, und zwar unter Bildung einer Hebelarm-Schwenkachse (S), um die der Aushebel-Greifer (15) mit dem Aushebel-Moment (M) antreibbar ist.

3. Hubvorrichtung nach Anspruch 1 oder 2, **dadurch gekennzeichnet, dass** der Aushebel-Greifer (15) einen Haken (35) aufweist, der in der Eingriffsposition (E) eine Batteriemodul-Gegenkontur (37) untergreift, und dass insbesondere der Haken (35) um eine bevorzugt kurze Hebelarmlänge von der Hebelarm-Schwenkachse (S) beabstandet ist.

4. Hubvorrichtung nach einem der vorhergehenden Ansprüche, **dadurch gekennzeichnet, dass** der Aushebel-Greifer (15) eine Krafteinleitungsstelle (29) aufweist, in die eine Aushebel-Kraft (F_{A}) einleitbar ist zum Aufbau des auf den Aushebel-Greifer (15) wirkenden Aushebel-Moments (M).

5. Hubvorrichtung nach Anspruch 4, **dadurch gekennzeichnet, dass** die Krafteinleitungsstelle (29) um eine bevorzugt lange Hebelarmlänge von der Hebelarm-Schwenkachse (S) beabstandet ist.

6. Hubvorrichtung nach einem der vorhergehenden Ansprüche, **dadurch gekennzeichnet, dass** die Greifereinheit (20) zusätzlich zum Aushebel-Greifer (15) einen weiteren Greifer (17) aufweist, und dass die beiden Greifer (15, 17) in der Eingriffsposition (E) mit einander gegenüberliegenden Batteriemodulseiten in Eingriff sind.

7. Hubvorrichtung nach Anspruch 6, **dadurch gekennzeichnet, dass** die lichte Weite (w) zwischen den beiden Greifern (15, 17) einstellbar ist, und dass insbesondere bei einer reduzierten lichten Weite (w₂) sich die beiden Greifer (15, 17) in der Eingriffsposition (E) befinden, und bei einer vergrößerten lichten Weite (w₁) sich die beiden Greifer (15, 17) störkonturfrei an den beiden Batteriemodul-Gegenkonturen (37) vorbei bewegen können, und/oder dass die beiden Greifer (15, 17) an einer das Batteriemodul (3) überspannenden Quertraverse (13) montiert sind.

8. Hubvorrichtung nach Anspruch 7, **dadurch gekennzeichnet, dass** der Aushebel-Greifer (15) an der Quertraverse (13) schwenkbeweglich über eine Langlochführung (19) gehaltert ist, bei der ein Verbindungspartner, bevorzugt Quertraverse (13), einen Lagerzapfen (21) aufweist, der in einem Langloch (23) des anderen Verbindungspartner, bevorzugt Aushebel-Greifer (15), linear verstellbar geführt ist.

9. Hubvorrichtung nach einem der vorhergehenden Ansprüche, **dadurch gekennzeichnet, dass** die Quertraverse (13) Schwenkanschläge (25, 27) aufweist, zwischen denen der Aushebel-Greifer (15) über einen Schwenkweg verstellbar ist.

10. Hubvorrichtung nach einem der vorhergehenden Ansprüche, **dadurch gekennzeichnet, dass** die Hubvorrichtung ein Zugmittel (33) aufweist, mittels dem im Hubvorgang die Greifereinheit (20) aus dem Batteriegehäuseteil (1) hebbar ist, und dass insbesondere das Zugmittel (33) unmittelbar an der Kraftleitungsstelle (29) des Aushebel-Greifers (15) angreift.

11. Hubvorrichtung nach Anspruch 10, **dadurch gekennzeichnet, dass** beim Aufbau der auf die Greifereinheit (20) wirkenden Hubkraft (F_{H}) der Aushebelvorgang startet, bei dem die Hubkraft (F_{H}) als Aushebelkraft (F_{A}) auf den Aushebel-Greifer (15) einwirkt, und dass insbesondere im weiteren Prozessverlauf, das heißt nach erfolgtem Aushebelvorgang, der Hubvorgang startet.

12. Hubvorrichtung nach einem der Ansprüche 7 bis 11, **dadurch gekennzeichnet, dass** zur Einstellung der lichten Weite (w) zwischen den beiden Greifern (15, 17) der Aushebel-Greifer (15) und/oder der weitere Greifer (17) über einen Greifer-Schlitten (43) querverstellbar an der Quertraverse (13) geführt ist.

13. Hubvorrichtung nach einem der vorhergehenden Ansprüche 7 bis 12, **dadurch gekennzeichnet, dass** der Aushebel-Greifer (15) an einer Schwenkstelle (45) schwenkbar an der Quertraverse (13) oder an dem Greifer-Schlitten (43) angelenkt ist, und dass die Schwenkachse der Schwenkstelle (45) achsparallel zur Hebelarm-Schwenkachse (S) ist, und dass insbesondere im Aushebelvorgang sich das Hebelarm-Ende (39) auf der Stützkontur (41) abwälzt oder abrollt.

14. Hubvorrichtung nach Anspruch 12 oder 13, **dadurch gekennzeichnet, dass** der Greifer-Schlitten (43) ein Stellglied (47) aufweist, mit dem die Aushebelkraft (F_{A}) auf die Krafteinleitungsstelle (29) des Aushebel-Greifers (15) ausübbar ist.

15. Verfahren zur Demontage eines Batteriemoduls (3) aus einem Batteriegehäuseteil (1) mittels einer Hubvorrichtung nach einem der vorhergehenden Ansprüche.

## Claims

1. Lifting device for dismounting a battery module (3) from a battery housing part (1), in particular a battery trough, of a high-voltage battery system in particular of a vehicle, in which the battery module (3) is in adhesive connection with a housing base (5) by means of a heat-conducting paste (11), the lifting device comprising a gripper unit (20), which can be adjusted by lifting and has at least one gripper (15), which gripper engages with the battery module (3) in an engagement position (E), and the gripper unit (20) lifting the battery module (3) from the battery housing part (1) in a lifting process, **characterized in that** the gripper (15) is designed as a levering gripper, by means of which a levering process takes place before the lifting process is carried out, in which levering process the levering gripper (15) can be acted upon by a levering moment (M), such that the levering gripper (15) lifts the battery module (3) on one side under release of the adhesive connection.

2. Lifting device according to claim 1, **characterized in that** the levering gripper (15) is designed as a lever arm, and **in that** the levering gripper (15) is supported in the levering process by a lever arm end (39) on an in particular battery-housing-side support contour (41), which is separate from the battery module (3), namely to form a lever arm pivot axis (S) about which the levering gripper (15) can be driven by the levering moment (M).

3. Lifting device according to either claim 1 or claim 2, **characterized in that** the levering gripper (15) comprises a hook (35), which, in the engagement position (E), underlaps a battery module mating contour (37), and **in that** in particular the hook (35) is spaced apart from the lever arm pivot axis (S) by a preferably short lever arm length.

4. Lifting device according to any of the preceding claims,
**characterized in that** the levering gripper (15) comprises a force introduction point (29) into which a levering force (F_{A}) can be introduced in order to build the levering moment (M) which acts on the levering gripper (15).

5. Lifting device according to claim 4, **characterized in that** the force introduction point (29) is spaced apart from the lever arm pivot axis (S) by a preferably long lever arm length.

6. Lifting device according to any of the preceding claims,
**characterized in that** the gripper unit (20) comprises a further gripper (17) in addition to the levering gripper (15), and **in that** the two grippers (15, 17) engage, in the engagement position (E), with mutually opposite battery module sides.

7. Lifting device according to claim 6, **characterized in that** the clear width (w) between the two grippers (15, 17) can be adjusted, and **in that** in particular in the case of a reduced clear width (w₂), the two grippers (15, 17) are located in the engagement position (E), and in the case of an increased clear width (w₁), the two grippers (15, 17) can be moved past the two battery module mating contours (37) in a interference-free manner, and/or **in that** the two grippers (15, 17) are mounted on a crossbar (13) which spans the battery module (3).

8. Lifting device according to claim 7, **characterized in that** the levering gripper (15) is pivotably mounted on the crossbar (13) by means of an elongate-hole guide (19), in which a connection partner, preferably a crossbar (13), comprises a bearing pin (21) which is guided in a linearly adjustable manner in an elongate hole (23) of the other connection partner, preferably the levering gripper (15).

9. Lifting device according to any of the preceding claims,
**characterized in that** the crossbar (13) comprises pivot stops (25, 27) between which the levering gripper (15) can be adjusted over a pivot range.

10. Lifting device according to any of the preceding claims,
**characterized in that** the lifting device comprises a traction means (33) by means of which the gripper unit (20) can be lifted out of the battery housing part (1) in the lifting process, and **in that** in particular the traction means (33) engages directly at the force introduction point (29) of the levering gripper (15).

11. Lifting device according to claim 10, **characterized in that** the levering process starts when the lifting force (F_{H}) which acts on the gripper unit (20) is built, at which point the lifting force (F_{H}) acts on the levering gripper (15) as a levering force (F_{A}), and **in that** the lifting process starts in particular in the further course of the procedure, i.e. after the levering process has taken place.

12. Lifting device according to any of claims 7 to 11, **characterized in that,** in order to adjust the clear width (w) between the two grippers (15, 17), the levering gripper (15) and/or the further gripper (17) are/is guided in a transversely movable manner on the crossbar (13) by means of a gripper carriage (43).

13. Lifting device according to any of the preceding claims 7 to 12, **characterized in that** the levering gripper (15) is pivotably articulated at a pivot point (45) on the crossbar (13) or on the gripper carriage (43), and **in that** the pivot axis of the pivot point (45) is axially parallel to the lever arm pivot axis (S), and **in that** in particular in the levering process, the lever arm end (39) rolls off the support contour (41).

14. Lifting device according to either claim 12 or claim 13,
**characterized in that** the gripper carriage (43) comprises an actuating member (47) by means of which the levering force (F_{A}) can be exerted onto the force introduction point (29) of the levering gripper (15).

15. Method for dismounting a battery module (3) from a battery housing part (1) by means of a lifting device according to any of the preceding claims.

## Revendications

1. Dispositif de levage permettant de démonter un module de batterie (3) d'une partie de boîtier de batterie (1), en particulier d'un coffre de batterie, d'un système de batterie haute tension, en particulier d'un véhicule, dans lequel le module de batterie (3) est en liaison par adhérence avec un fond de boîtier (5) avec intercalation d'une pâte thermoconductrice (11), dans lequel le dispositif de levage présente une unité formant élément de préhension (20) réglable en hauteur et comportant au moins un élément de préhension (15) qui est en prise avec le module de batterie (3) dans une position de mise en prise (E), et dans lequel, lors d'un processus de levage, l'unité formant élément de préhension (20) lève le module de batterie (3) de la partie de boîtier de batterie (1),
**caractérisé en ce que** l'élément de préhension (15) est réalisé sous forme d'élément de préhension de soulèvement, au moyen duquel, avant l'exécution du processus de levage, un processus de soulèvement est effectué, dans lequel l'élément de préhension de soulèvement (15) peut être sollicité par un couple de soulèvement (M), de sorte que l'élément de préhension de soulèvement (15) soulève le module de batterie (3) d'un côté en enlevant la liaison par adhérence.

2. Dispositif de levage selon la revendication 1, **caractérisé en ce que** l'élément de préhension de soulèvement (15) est réalisé sous la forme d'un bras de levier, **et en ce que** l'élément de préhension de soulèvement (15) est appuyé, lors du processus de soulèvement, avec une extrémité de bras de levier (39) sur un contour d'appui (41) séparé du module de batterie (3), en particulier côté boîtier de batterie, à savoir avec formation d'un axe de pivotement de bras de levier (S) autour duquel l'élément de préhension de soulèvement (15) peut être entraîné avec le couple de soulèvement (M).

3. Dispositif de levage selon la revendication 1 ou 2, **caractérisé en ce que** l'élément de préhension de soulèvement (15) présente un crochet (35) qui, dans la position de mise en prise (E), vient en prise par dessous avec un contre-contour de module de batterie (37), **et en ce qu'**en particulier le crochet (35) est espacé de l'axe de pivotement de bras de levier (S) d'une longueur de bras de levier de préférence courte.

4. Dispositif de levage selon l'une des revendications précédentes, **caractérisé en ce que** l'élément de préhension de soulèvement (15) présente un point d'introduction de force (29) dans lequel une force de soulèvement (F_{A}) peut être introduite pour la génération du couple de soulèvement (M) agissant sur l'élément de préhension de soulèvement (15).

5. Dispositif de levage selon la revendication 4, **caractérisé en ce que** le point d'introduction de force (29) est espacé de l'axe de pivotement de bras de levier (S) d'une longueur de bras de levier de préférence longue.

6. Dispositif de levage selon l'une des revendications précédentes, **caractérisé en ce que** l'unité formant élément de préhension (20) présente, en plus de l'élément de préhension de soulèvement (15), un autre élément de préhension (17), **et en ce que,** dans la position de mise en prise (E), les deux éléments de préhension (15, 17) sont en prise avec des côtés de module de batterie opposés l'un à l'autre.

7. Dispositif de levage selon la revendication 6, **caractérisé en ce que** la largeur intérieure (w) entre les deux éléments de préhension (15, 17) est réglable, **et en ce qu'**en particulier, dans le cas d'une largeur intérieure réduite (w₂), les deux éléments de préhension (15, 17) se trouvent dans la position de mise en prise (E) et, dans le cas d'une largeur intérieure agrandie (w₁), les deux éléments de préhension (15, 17) peuvent se déplacer sans contour gênant au-delà des deux contre-contours de module de batterie (37), **et/ou en ce que** les deux éléments de préhension (15, 17) sont montés au niveau d'une traverse transversale (13) recouvrant le module de batterie (3).

8. Dispositif de levage selon la revendication 7, **caractérisé en ce que** l'élément de préhension de soulèvement (15) est maintenu sur la traverse transversale (13) de manière à pouvoir pivoter par l'intermédiaire d'un guidage par trou oblong (19) dans lequel un partenaire de liaison, de préférence la traverse transversale (13), présente un tourillon (21) qui est guidé de manière à pouvoir être réglé linéairement dans un trou oblong (23) de l'autre partenaire de liaison, de préférence l'élément de préhension de soulèvement (15).

9. Dispositif de levage selon l'une des revendications précédentes, **caractérisé en ce que** la traverse transversale (13) présente des butées de pivotement (25, 27) entre lesquelles l'élément de préhension de soulèvement (15) peut être réglé sur une trajectoire de pivotement.

10. Dispositif de levage selon l'une des revendications précédentes, **caractérisé en ce que** le dispositif de levage présente un moyen de traction (33) au moyen duquel, lors du processus de levage, l'unité formant élément de préhension (20) peut être levée de la partie de boîtier de batterie (1),
**et en ce qu'**en particulier le moyen de traction (33) vient en prise directement au niveau du point d'introduction de force (29) de l'élément de préhension de soulèvement (15).

11. Dispositif de levage selon la revendication 10, **caractérisé en ce que,** lors de la génération de la force de levage (F_{H}) agissant sur l'unité formant élément de préhension (20), le processus de soulèvement débute, dans lequel la force de levage (F_{H}) agit comme force de soulèvement (F_{A}) sur l'élément de préhension de soulèvement (15), **et en ce qu'**en particulier, lors du déroulement ultérieur du processus, c'est-à-dire après que le processus de soulèvement a été effectué, le processus de levage débute.

12. Dispositif de levage selon l'une des revendications 7 à 11,
**caractérisé en ce que,** pour le réglage de la largeur intérieure (w) entre les deux éléments de préhension (15, 17), l'élément de préhension de soulèvement (15) et/ou l'autre élément de préhension (17) sont guidés de manière à pouvoir être réglés transversalement sur la traverse transversale (13) par l'intermédiaire d'un chariot d'élément de préhension (43).

13. Dispositif de levage selon l'une des revendications précédentes 7 à 12, **caractérisé en ce que** l'élément de préhension de soulèvement (15) est articulé de manière à pouvoir pivoter en un point de pivotement (45) sur la traverse transversale (13) ou sur le chariot d'élément de préhension (43), **et en ce que** l'axe de pivotement du point de pivotement (45) est parallèle à l'axe par rapport à l'axe de pivotement de bras de levier (S), **et en ce que** l'extrémité de bras de levier (39) roule sur le contour d'appui (41), en particulier lors du processus de soulèvement.

14. Dispositif de levage selon la revendication 12 ou 13,
**caractérisé en ce que** le chariot d'élément de préhension (43) présente un actionneur (47) au moyen duquel la force de soulèvement (F_{A}) peut être exercée au niveau du point d'introduction de force (29) de l'élément de préhension de soulèvement (15).

15. Procédé permettant de démonter un module de batterie (3) d'une partie de boîtier de batterie (1) au moyen d'un dispositif de levage selon l'une des revendications précédentes.
